Europäisches Patentamt

European Patent Office

Office européen des brevets

(11) Publication number: **0 489 176 A1**

## EUROPEAN PATENT APPLICATION
### published in accordance with Art. 158(3) EPC

(21) Application number: 91911365.4

(22) Date of filing: **20.06.91**

(86) International application number:
**PCT/JP91/00833**

(87) International publication number:
**WO 92/00233 (09.01.92 92/02)**

(51) Int. Cl.5: **B65G 1/00, B66F 9/24**

(30) Priority: **22.06.90 JP 164435/90**

(43) Date of publication of application:
**10.06.92 Bulletin 92/24**

(84) Designated Contracting States:
**DE GB**

(71) Applicant: **FUJI LOGITECH, INC.**
**2-12, Seikai 2-chome**
**Shimizu-shi, Shizuoka 424(JP)**
Applicant: **SANDENSHA CO., LTD.**
**7-15, Hamamatsuchu 2-chome**
**Minato-ku, Tokyo 105(JP)**

(72) Inventor: **SUZUKI, Takeo, Suzuyo Soko**
**Kabushiki Kaisha**
**11-17 , Koyamachi**
**Shizuoka-shi, Shizuoka 420(JP)**

Inventor: **SONE, Atsushi, Suzuyo Kabushiki Kaisha**
**11-17, Koyamachi**
**Shizuoka-shi, Shizuoka 420(JP)**
Inventor: **ISHIHARA, Toshiro, Sandensha Co., Ltd.**
**7-15, Hamamatsucho 2-chome, Minato-ku Tokyo 105(JP)**
Inventor: **KOGAMI, Mineichi, Sandensha Co., Ltd.**
**7-15, Hamamatsucho 2-chome, Minato-ku Tokyo 105(JP)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) **PALLET ARRANGEMENT CONTROLLING SYSTEM USING WORKING VEHICLE.**

(57) A pallet arrangement controlling system for identifying the position of a pallet, in which a plurality of position indicating units each of which indicates itself upon reception of an Id (identification) signal specific to itself are disposed in the pallet arrangement area and, on the other hand, an Id signal transmitting unit which selectively transmits an Id signal corresponding to each of said position indicating units is provided on a working vehicle or at a central instruction station so that, when said vehicle or instruction station transmits a specific Id signal corresponding to the position of a target pallet, one of said receiving position indicating units which positionally corresponds to said specific Id signal indicates itself.

FIG.3

## BACKGROUND OF THE INVENTION:

(Technical Field)

The present invention relates to a pallet control system utilized by a working vehicle to carry a laden pallet in a storage space provided within a warehouse or the like or to carry such pallet already stored in said space away from the warehouse.

(Prior Art)

With the conventional pallet control system, the operator loads a vehicle, such as a forklift truck with a laden pallet, searches for a free pallet area within the warehouse, stores said laden pallet therein, then records the actual storage location of this pallet on a list (e.g. slip) on hand and, upon completion of this operation, brings said list back to the office where the operator inputs the data on this pallet location into the host computer for control of the pallet location.

However, such system of prior art has heavily burdened the operator with searching for the free space, recording on the list and data input to a terminal equipment. In addition, an error has often been encountererd by the last-mentioned data input to the terminal equipment.

Accordingly, it is an object of the present invention to provide a pallet control system improved so as to lighten a burden of the operator and to avoid the erroneous data input.

## SUMMARY OF THE INVENTION:

The object set forth above is achieved, in accordance with the present invention, by adopting four technical means as will be described below.

A first aspect of the invention resides in a pallet control system comprising: a plurality of pallet areas for storage of pallets; a plurality of location display units arranged within the respective pallet areas or along passage spaces extending adjacent said areas, each of said location display units having display means adapted to display its own location upon reception of an Id (identification) signal identifying this particular location; and an Id transmitter unit provided on a working vehicle or in a central control station to selectively transmit Id signals corresponding to respective said location display units; wherein, when said working vehicle or central control station generates the particular Id signal corresponding to the location of a target pallet, the particular one of said locaiton display units receiving this Id signal that is identified by said particular Id signal displays itself, allowing the location of the target pallet being carried away from a warehouse to be determined.

According to this aspect of the invention, the display means such as a light emitter element of the location display unit is activated and makes it easy to localize the target pallet to be carried away from the warehouse.

A second aspect of the present invention resides in a pallet control system comprising: a plurality of pallet areas for storage of pallets; a plurality of location display units arranged within the respective pallet areas or along passage spaces extending adjacent said areas, each of said location display units being responsive to an excitation signal to generate an Id (identification) signal identifying this particular location; and an Id transmitter/receiver unit provided on a working vehicle adapted to transmit said excitation signal to said location display units and to send the Id signal received from appropriate one of said location display units to a central control station; wherein, when said working vehicle transmits the excitation signal to the location display unit associated with the area the vehicle is passing by, said location display unit having received this excitation singal generates its own Id signal and said Id transmitter/receiver unit received and transmit this Id signal to the central control station, allowing a location of the pallet being carried in or away from a warehouse to be determined.

According to this aspect of the invention, the particular location display unit by which the working vehicle is passing during operation of carrying the pallet in or away from the warehouse is reponsive to the excitation signal generated from the working vehicle at this moment of passage to generate the Id signal identifying this particular location display unit so that the number designating the pallet area array corresponding to this particular location can be determined by the central control station and thereby the location of the pallet being carried in or away from the warehouse can be effectively controlled.

A third aspect of the present invention resides in a pallet control system comprising: a plurality of pallet areas for storage of pallets; a plurality of location display units arranged within the pallet areas or along passage spaces extending adjacent said areas, each of said location display units periodically generating its own Id (identification) signal; and an Id receiver unit provided on a working vehicle to receive said Id signals from said location display units and to send them to a central control station; wherein, when said Id receiver unit recieves the Id signal from any one of said location display units by which said working behicle is passing, this Id signal is transmitted to the central control station, allowing a location of the pallet being carried in a warehouse to be determined.

According to this aspect of the invention, the particular location display unit by which the working vehicle is passing in order to carry the pallet in the warehouse generates the Id signal identifying this particular location display unit at this moment of passage and thus the central control station determines the number of pallet area array corresponding to this location to control the location of the pallet being carried in the warehouse.

A fourth aspect of the present invention resides in a pallet control system similar to that according to said third aspect of the invention but further comprising a rotation detector and an azimuth detector provided on said working vehicle to detect traveling distance and direction of said working vehicle, respectively; wherein, when said Id receiver unit receives the Id signal from any one of said location display units by which said working vehicle is passing, this Id signal is transmitted to the central control station together with the traveling distance and direction from said particular location display unit to the location of the pallet having been carried in a warehouse, allowing a location of the pallet carried in the warehouse to be determined.

According to this aspect of the invention, in addition to the effect provided by said third aspect of the invention, it is possible to obtain further detailed information about the storage locaiton of the pallet carried in the warehouse.

BRIEF DESCRIPTION OF THE DRAWINGS:

Figs. 1 through 7 illustrate an embodiment of the invention, in which:
Fig. 1 is a plan view showing a storage space and a passage space in warehouse;
Fig. 2 is a schematic diagram of an office;
Fig. 3 is a perspective view showing a forklift truck and pallets;
Fig. 4 is a schematic diagram of various vehicle-loaded devices;
Fig. 5 is a block diagram of an Id detector unit;
Fig. 6 is a diagram schematically showing a rotation detector, a measuring unit and an azimuth detector; and
Fig. 7 is a block diagram of a location display unit.

PREFERRED EMBODIMENT:

An embodiment of the invention will be described in reference with the accompanying drawings.

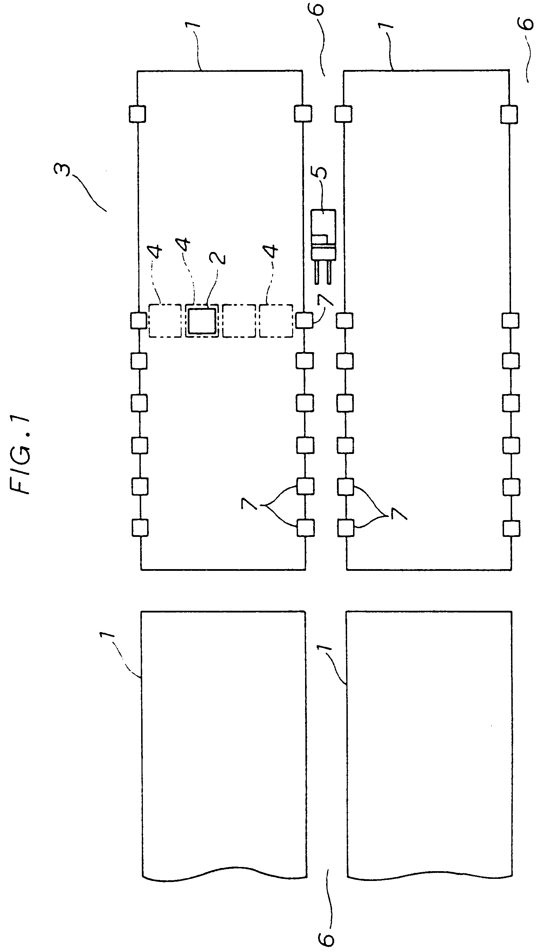

Fig. 1 is a plan view schematically showing important features within a warehouse and reference numeral 1 designates a storage space which is provided on a floor 3 for storage of laden pallets 2.

This storage space 1 includes pallet areas 4 adapted for lengthwise and crosswise placement of a plurality of pallets. Laterally of the storage space 1, there is provided a passage space 6 for working vehicles (manned forklift trucks in this case) and there are provided along this passage space 6 location display units 7 associated with respective rows or arrays of the pallet areas 4.

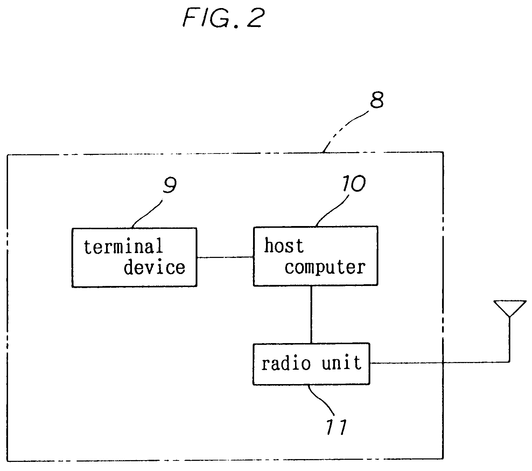

Referring to Fig. 2. a central station (e.g., an office) 8 has a data input terminal device 9, a data processing host computer 10, and a radio unit 11 for data communication with the forklift truck 5.

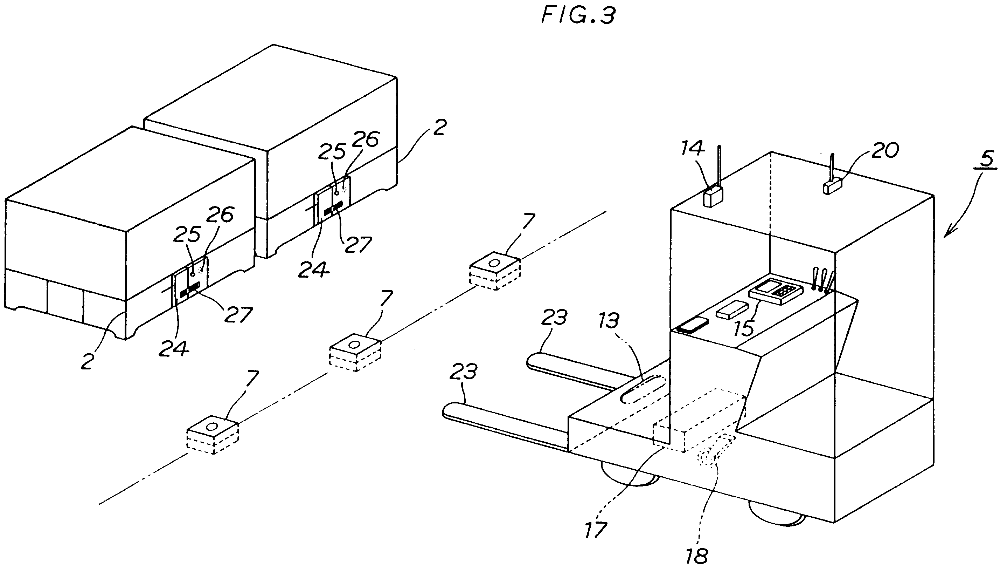

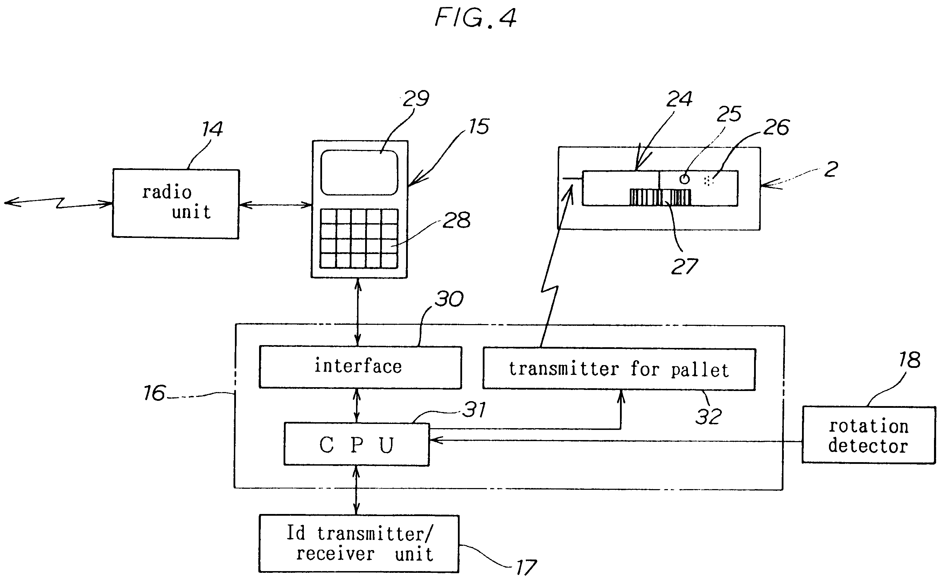

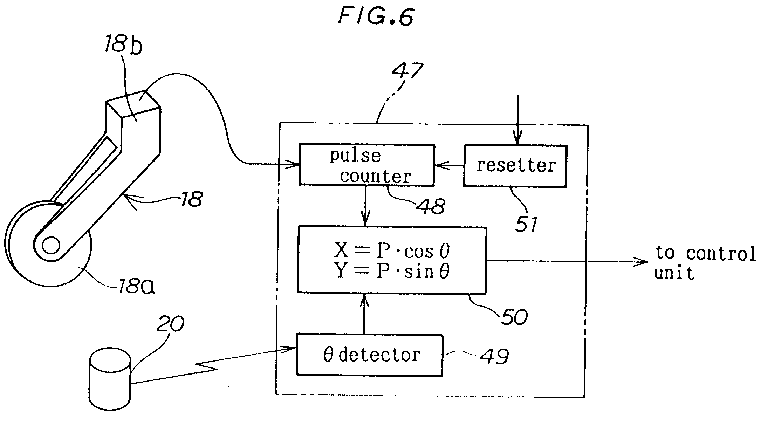

Referring to Fig. 3, said forklift truck 5 is loaded thereon with a bar code reader (coded display reader means) 13, a radio unit 14, a handy terminal 15, as well as a control unit 16, an Id transmitter/receiver unit 17, a rotation detector (measuring roll) 18, as shown in Fig. 4, and independent measuring unit 47 and an azimuth detector 20, as shown in Fig. 6.

Said radio unit 14 serves for data communication with the radio unit 11 of the central control station 8. Referring to Fig. 4, said handy terminal 15 having a control panel 28 and a data display 29 is interposed between the radio unit 14 and the control unit 16 to relay the received or transmitted data. Referring also to Fig. 4, said control unit 16 comprises an interface 30, a CPU 31 and a transmitter unit 32 for the pallet. The Id transmitter/receiver unit 17 and the rotation detector 18 as will be described later in detail are connected to said CPU 31.

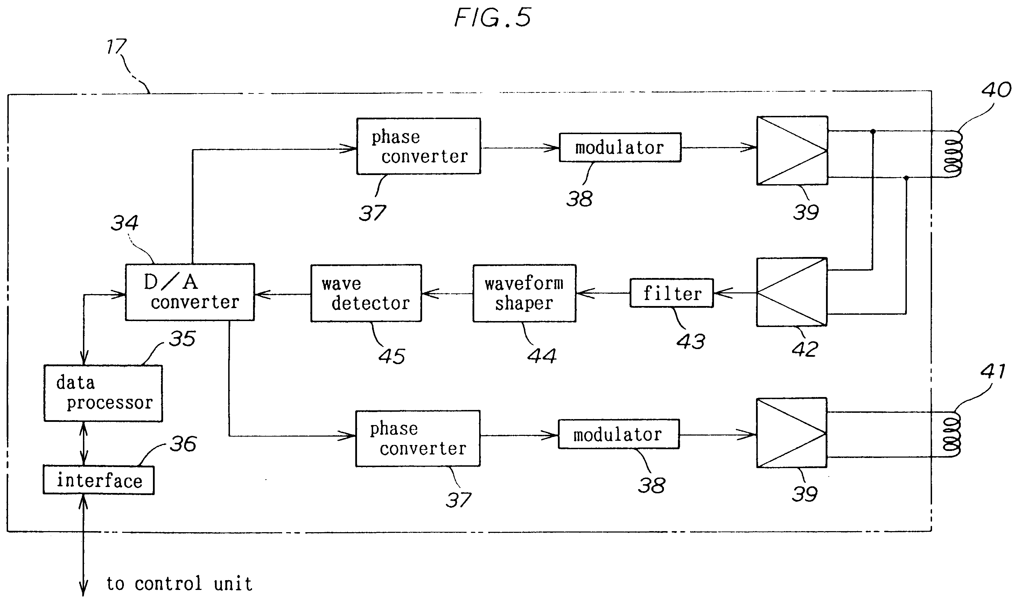

The Id transmitter/receiver unit 17 is mounted on the bottom of the forklift truck 5 so as to face the floor and comprises, as seen in Fig. 5, a D/A converter 34, a data processor 35, an interface 36, a phase coverter 37, a modulator 38, an amplifier 39, a transmitter/receiver 40, a transmitter 41, an amplifier 42 used to amplify the Id signal from said transmitter/receiver 40, a filter 43, a waveform shaper 44 and a wave detector 45. The particular Id number of the passage space provided from the control unit 16 is subjected to data processing by the data processor 35, and then transmitted through the associated phase converter 37, phase modulator 38, amplifier 39, and transmitter/receiver 40 or transmitter 41 to an Id signal transmitter/receiver 53 of the location display unit 7. The Id signal transmitted, in response to this, by the Id signal transmitter/receiver 53 is received by the transmitter/receiver 40, then transmitted through the amplifier 42, the filter 43, the waveform shaper 44, the wave detector 45 and the D/A converter 34 to the data processor 35, in which said Id signal is determined, and transmitted to the control unit 16.

Referring to Fig. 6, the rotation detector 18 comprising a rotatable roller 18a and a pulse generator 18b adapted to generate the number of pluses corresponding to rotational frequency is mounted on a floor of the forklift truck 5. The azimuth detector 20 may comprise a gyro or an angle sensor and mounted on a roof of the forklift truck 5 in order to detect the azimuth of the forklift truck 5. The independent measuring unit 47 comprises a pulse counter 48 to count the number of pulses coming from the pulse generator 18b of the rotation detector 18, an azimuthal angle $\theta$ detector 49 adapted to detect the azimuthal angle on the basis of an output from the azimuth datector 20, a calculator 50 adapted to calculate a current location X, Y of the forklift truck on the basis of the pulse counts P and the azimuthal angle $\theta$, and a resetter 51 to reset the pulse counter 48.

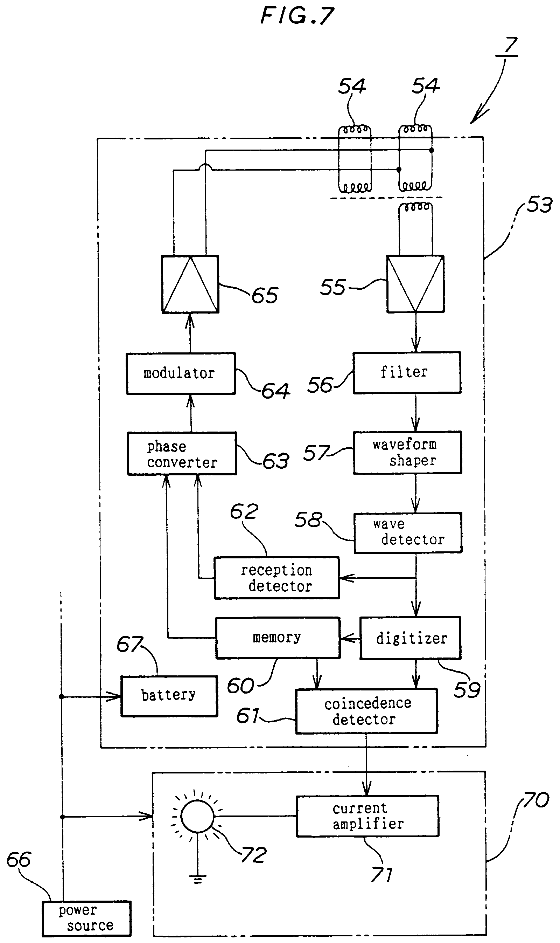

Referring to Fig. 7, the location display unit 7 comprises the Id signal transmitter/receiver 53 adapted to generate its own Id signal in response to the signal from the Id transmitter/receiver unit 17 and a display 70 serving as display means adapted to activate a light emitter element 72 in response to a signal generated according to said own Id signal, these components being embedded in the floor 3. The Id signal transmitter/receiver 53 comprises a plurality of transmitters/receivers 54, and amplifier 55, a filter 56, a waveform shaper 57, a wave detector 58, a digitizer 59, a memory 60, a coincidence detector 61 adapted to provide an output to a current amplifier 71 of the display 70 when the digitized value coincides with the Id information in the memory, a reception detector 62, a phase converter 63, a modulator 64, an amplifier 65, and a battery 67 connected to an external power source 66. The display 70 comprises the current amplifier 71 and the light emitter element 72 connected thereto.

The pallet 2 is provided on its front with a receiver unit 24 which is, in turn, provided with a lamp 25 and a buzzer 26 so that both the lamp 25 and the buzzer 26 are activated upon reception of the code signal identifying this particular pallet 2. The receiver unit 24 is further provided at a lower portion of its front with a bar code 27 identifying this particular pallet.

Now operation of the system as has been described hereinabove will be discussed.

When a laden pallet is carried in the storage space within the warehouse or carried away from the storage space, the host computer 10 of the central control station 8 transmits a command to the forklift truck via the vehicle-loaded radio unit 14.

First, the case of carrying the pallet away from the warehouse will be discussed.

In carrying the pallet away from the warehouse, a rough indication of a destination including a warehouse number and a passage space number is displayed on the display 29 of the vehicle-loaded handy terminal 15 via radio communication from the host computer 10. Based on this displayed data, the operator drives the forklift truck 5 to the indicated passage space 6 and, as the forklift truck 5 approaches the indicated storage space 1, the vehicle-loaded Id transmitter/receiver unit 17 generates the Id signal corresponding to the target pallet 2 to be carried away from the warehouse and this Id signal is received by the Id signal transmitter/receiver 53 of the locaiton display unit 7 placed at the entrance of the pallet area array in which said target pallet 2 is stored.

The Id signal transmitter/receiver 53 determines whether the received Id signal coincides with the Id code previously written in the memory and, when the coincidence occurs, activates the light emitter element 72 through the current amplifier 71 of the display 70. In this manner, the operator can easily find the particular pallet area array within the storage space where the target pallet 2 is stored. Then, the vehicle-loaded transmitter 32 associated with the pallet generates the code signal identifying the target pallet 2 and this code signal is received by the receiver unit 24 mounted on the pallet 2. If the received code signal is same as the code previously assigned to this pallet 2, the lamp 25 and the buzzer 26 of the receiver unit 24 mounted on this pallet 2 are activated, allowing the target pallet 2 to be readily identified. Upon depression of a completion button after having loaded the forklift truck with the target pallet 2, the data on this pallet 2 and the progress of the operation are transmitted by the handy terminal 15 and the radio unit 14 to the host computer 10 of the central control station 8.

Now the case of carrying the pallet 2 in the pallet area within the storage space 1 for storage will be described.

Operation of carrying the pallet in the warehouse can be performed in two different modes.

In a first mode, the operation is performed according to the indication from the host computer 10 which indicates a particular pallet area array within the storage space 1.

Also in this case, a destination of the forklift truck 5 is roughly indicated by the host computer just as in the case of carrying the pallet away from the warehouse and, as the forklift truck 5 is driven by the operator according to said rough indication, the vehicle-loaded Id detector unit 17 generates the Id signal. In response to this Id signal, the light emitter element 72 of the location display unit 7 corresponding to said Id signal is activated and allows a pallet area array to be determined. The forklift truck 5 is guided onto the locaiton display unit 7 embedded in the floor so that Id signal generated by the Id signal transmitter/receiver 53 of this location display unit 7 can be received by the vehicle-loaded Id transmitter/receiver unit 17 and the control unit 16 can determine the associated pallet area array according to said Id signal. Thereafter the pallet 2 will be placed in a free space of said pallet area array . During this placement, the Id number of the location display unit corresponding to the number of the pallet area array is transmitted by the handy terminal 15 and the radio units 14, 11 to the host cumputer 10 in the office to determine the pallet location and to store the carry-in data.

After a given pallet area has been determined, i.e., after the forklift truck 5 has passed the location display unit 7, the rotation detector 18 and the azimuth detector 20 are driven so that the measuring unit 47 can arithmetically obtain the distance and the direction from the point at which the pallet area array has been determined to the point at which the pallet has been placed (independent travel measuring mode). Thus, the location data on the placed pallet 2 is stored in the host computer 10 and thereby a detailed carry-in control is achieved.

In the second mode, the operator him-or-herself searches an appropriate storage space including the pallet area arrays to carry the pallet in the warehouse. Also in this case, as the forklift truck 5 is guided onto any location display unit 7, the Id signal is generated from the vehicle-loaded Id transmitter/receiver unit 17 and the Id signal generated from said location display unit 7 in response to said Id signal from the vehicle-loaded Id transmitter/receiver unit 17 is received and thereby the desired data concerning the storage space 1 as well as the pallet area array can be obtained. Furthermore, the rotation detector 18 and the azimuth detector 20 may be driven as in the above-mentioned case, to obtain the detailed control data on the pallet location, for example, determination of the distance as well as the direction to the point at which the pallet 2 has been placed.

In this case, the respective location display units 7 are adapted to generate their own Id signals in a periodical manner and these Id signals may be made discrete, for example, by time sharing so that a radio interference which would otherwise occur can be reliably avoided in the control system typically utilized by a plurality of forklift trucks.

Although the storage space has been described with respect to the warehouse in the above-mentioned specific embodiment, the present invention is applicable also to a location detecting system utilized by any type of movable body within a plant, a building or other facilities.

Altough the working vehicle has been described as the forklift truck, the present invention is applicable also to cargo work control or distribution control system utilized by unmanned vehicle with or without track, automobile, auto-flatcar or the like.

Moreover, though the passage space and the storage space have been described as being separately fixed, it is also possible to use the passage space as the storage space, if necessary in order to enlarge the storage space.

Furthermore, though there is provided a single location display unit for each pallet area array in the above-mentioned embodiment, the number of the location display units may be increased, if desired.

As will be apparent from the foregoing descriptions of the preferred embodiment, the Id signal generated by the location display unit during carry-away or carry-in allows the target pallet area array to be determined and activation of the display means included in the location display unit during carry-away allows the target pallet area array to be easily found. Additionally, the rotation detector and the azimuth detector may be driven during carry-in which allows the point at which the pallet has been placed to be reliably determined. These features of the invention makes the pallet control reliable, lighten a burden on the operator and avoide the erroneaus data input.

**Claims**

1. A pallet control system comprising:
   a plurality of pallet areas for storage of pallets;
   a plurality of location display units arranged within the respective pallet areas or along passage spaces extending adjacent the areas, each of said location display units having display means adapted to display its own location upon reception of an Id (identification) signal identifying this particular location; and
   an Id transmitter unit provided on a working vehicle or in a central control station to selectively transmit Id signals corresponding to respective said location display units; and
   wherein, when said working vehicle or central control station generates the particular Id signal corresponding to the location of a target pallet, the particular one of said location display units receiving this Id signal that is identified by said particular Id signal displays itself, allowing the location of the target pallet being carried away from a warehouse to be determined.

2. A pallet control system comprising:
   a plurality of pallet areas for storage of pallets;
   a plurality of location display units arranged within the respective pallet areas or along passage spaces extending adjacent the areas, each of said location display units being responsive to an excitation signal to generate an Id (identification) signal identifying this particular location; and

an Id transmitter/receiver unit provided on a working vehicle adapted to transmit said excitation signal to said location display units and to send the Id signal received from appropriate one of said location display units to a central control station; and

wherein, when said working vehicle transmits the excitation signal to the location display unit associated with the area the vehicle is passing by, said location display unit having received this excitation signal generates its own Id singal and said Id transmitter/receiver unit receives and transmits this Id singal to the central control station, allowing a location of the pallet being carried in or away from a warehouse to be determined.

3. A pallet control system comprising:

a plurality of pallet areas for storage of pallets;

a plurality of location display units arranged within the respective pallet areas or along passage spaces extending adjacent the areas, each of said location display units periodically generating its own Id (identification) signal; and

an Id receiver unit provided on a working vehicle to receive said Id signals from said location display units and to send them to a central control station; and

wherein, when said Id receiver unit receives the Id signal from any one of said location display units by which said working vehicle is passing, this Id singal is transmitted to the central control station, allowing a location of the pallet being carried in a warehouse to be determined.

4. A pallet control system comprising:

a plurality of pallet areas for storage of pallets;

a plurality of location display units arranged within the respective pallet areas or along passage spaces extending adjacent the areas, each of said location display units generating its own Id (identification) signal;

an Id receiver unit provided on a working vehicle to receive said id signals from said location display units and to send them to a central control station;

a rotation detector and an azimuth detector provided on said working vehicle to detect traveling distance and direction of said working vehicle, respectively; and

wherein, when said Id receiver unit receives the Id signal from any one of said location display units by which said working vehicle is passing, this Id signal is transmitted to the central control station together with the traveling distance and direction from said particular location display unit to the location of the pallet having been carried in a warehouse, allowing a location of the pallet carried in the warehouse to be determined.

FIG.1

FIG.2

FIG.3

## FIG.4

radio
unit

interface

transmitter for pallet

C P U

rotation
detector

Id transmitter/
receiver unit

EP 0 489 176 A1

FIG.5

EP 0 489 176 A1

FIG.6

47

resetter 51

pulse counter 48

$X = P \cdot \cos\theta$
$Y = P \cdot \sin\theta$ 50

$\theta$ detector 49

to control unit

18b

18

18a

20

## FIG.7

# INTERNATIONAL SEARCH REPORT

International Application No PCT/JP91/00833

**I. CLASSIFICATION OF SUBJECT MATTER** (If several classification symbols apply, indicate all) 6

According to International Patent Classification (IPC) or to both National Classification and IPC

Int. Cl$^5$  B65G1/00, B66F9/24

**II. FIELDS SEARCHED**

| Minimum Documentation Searched 7 | |
|---|---|
| Classification System | Classification Symbols |
| IPC | B65G1/00, B66F9/24 |

Documentation Searched other than Minimum Documentation
to the Extent that such Documents are Included in the Fields Searched 8

| | |
|---|---|
| Jitsuyo Shinan Koho | 1926 - 1990 |
| Kokai Jitsuyo Shinan Koho | 1971 - 1990 |

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| Y | JP, A, 53-20267 (Komatsu Ltd.), February 24, 1978 (24. 02. 78), (Family: none) | 1, 2, 4 |
| Y | JP, A, 1-317904 (Fuji Electric Co., Ltd.), December 22, 1989 (22. 12. 89), (Family: none) | 1, 2 |
| Y | JP, A, 2-43111 (Daifuku K.K.), February 13, 1990 (13. 02. 90), (Family: none) | 3 |
| A | JP, A, 63-12504 (Fujitsu General Co., Ltd.), January 19, 1988 (19. 01. 88), (Family: none) | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| September 6, 1991 (06. 09. 91) | September 17, 1991 (17. 09. 91) |

| International Searching Authority | Signature of Authorized Officer |
|---|---|
| Japanese Patent Office | |

Form PCT/ISA/210 (second sheet) (January 1985)